# EUROPEAN PATENT SPECIFICATION

(11) **EP 4 019 293 B1**
(45) Date of publication and mention of the grant of the patent: **12.07.2023**
(21) Application number: 21215883.6
(22) Date of filing: 20.12.2021
(51) Int. Cl.: B60C 19/00, B60C 15/06

(54) **TIRE**
REIFEN
PNEUMATIQUE

(30) Priority: 24.12.2020 JP 2020215689
(43) Date of publication of application: 29.06.2022
(73) Proprietor: Toyo Tire Corporation, Itami-shi, Hyogo 664-0847 (JP)
(72) Inventor: HOSOMI, Kazumasa, Hyogo 664-0847 (JP)
(74) Representative: Müller-Boré & Partner Patentanwälte PartG mbB

(56) References cited:
- DE-A1-102017 209 551
- DE-A1-102018 200 556
- US-A- 5 181 975
- US-B1- 8 977 422
- US-B2- 10 647 166

## Description

### BACKGROUND OF THE INVENTION

### Field of the Invention

The present invention relates to a tire in which an electronic component is embedded.

### Related Art

Conventionally, a tire embedding an electronic component such as an RFID tag has been known. With such a tire, it is possible to carry out production management of the tire, usage history management, etc. by the RFID tag embedded in the tire and a reader as external equipment carrying out communication. For example, Patent Document 1 discloses a tire embedding an RF tag in the vicinity of a stiffener.

DE 10 2017 209551 A1 discloses a vehicle tire with a transponder in which the transponder can be integrated in a simple manner in the vehicle tire.

DE 10 2018 200556 A1 discloses a method for producing a transponder for a vehicle tire which improves the arrangement of transponders on vehicle tires.

US 5 181 975 A discloses a pneumatic tire having an integrated circuit transponder located within the structure of the tire for use in tire identification and/or other data transmission.

US 8 977 422 B1 discloses a transponder and tire assembly and specifically a tire in which a vibration sensor is attached to the tire and/or a wheel for operational deployment as an assembly.

US 10 647 166 B2 discloses a tire and tire manufacturing method which can protect an electronic component, in a case of the tire greatly distorting, or a case of shock acting on the tire.

Patent Document 1: Japanese Unexamined Patent Application, Publication No. 2016-37236

### SUMMARY OF THE INVENTION

According to the technology illustrated in Patent Document 1, it is possible to carry out production management, shipping management, usage history management, etc. of tires. However, in the technology illustrated in Patent Document 1, the RF tag is arranged between the stiffener and side rubber, and a fiber layer such as a carcass ply does not exist between the RF tag and tire outer wall. Consequently, there is concern over the RF tag not being protected and becoming damaged in a case of the tire greatly distorting or a case of shock acting on the tire.

The present invention has been made taking account of the above-mentioned problem, and an object thereof is to provide a tire which can protect an electronic component.

The present invention is defined by the independent claims. Further aspects are defined in the dependent claims. In particular, there is provided a tire including: a pair of beads having a bead core and a bead filler which extends to an outer side in a tire-radial direction of the bead core; a flipper which envelops at least part of the bead; a carcass ply which has a ply body extending from one bead to another bead, and a ply folding part which is folded back at the bead, and which envelopes the flipper; and an RFID tag as an electronic component embedded within the tire so as to make contact with the flipper.

According to the present invention, it is possible to provide a tire which can protect an electronic component.

### BRIEF DESCRIPTION OF THE DRAWINGS

FIG. 1 is a view showing a half section in a tire-width direction of a tire according to a first embodiment;
FIG. 2 is a partially enlarged cross-sectional view of the tire in FIG. 1;
FIG. 3 is a view for explaining a flipper of the tire according to the above-mentioned embodiment;
FIG. 4 is a view showing the relationship between the distance between a bead core and RFID tag, and the communication distance;
FIG. 5 is a partially enlarged cross-sectional view of a tire according to a first modified example of the above embodiment; FIG. 6 is a partially enlarged cross-sectional view of a tire according to a second modified example of the above embodiment;
FIG. 7 is a partially enlarged cross-sectional view of a tire according to a third modified example of the above embodiment; FIG. 8A is a view showing an RFID tag protected by a protective member in a tire according to a second embodiment; FIG. 8B is a view showing a cross section along the line b-b in FIG. 8A; and
FIG. 8C is a view showing a cross section along the line c-c in FIG. 8A.

### DETAILED DESCRIPTION OF THE INVENTION

### <First Embodiment>

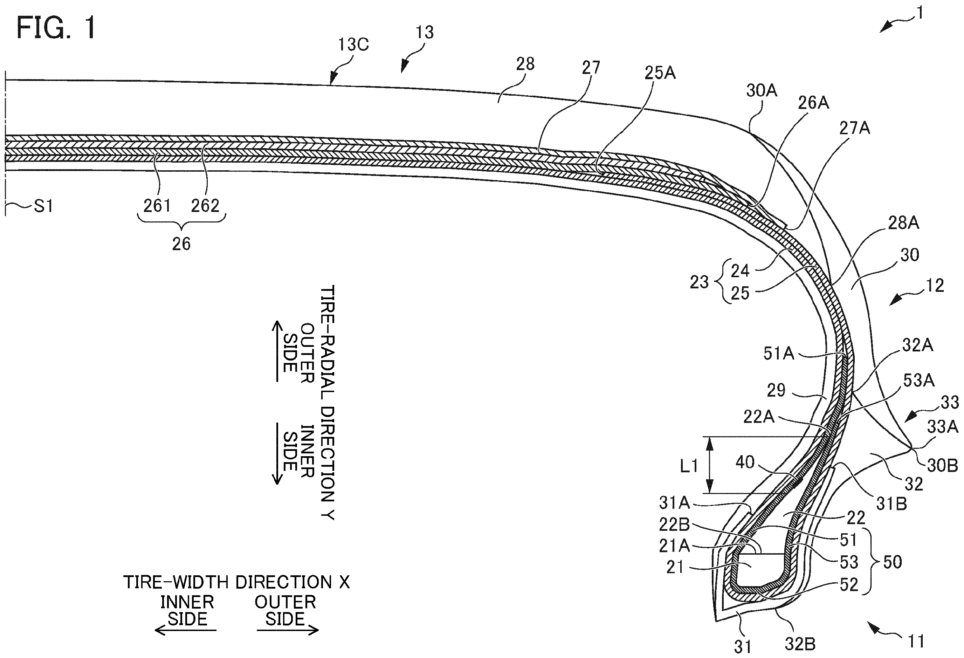

Hereinafter, a first embodiment of the present invention will be explained while referencing the drawings. FIG. 1 is a view showing a half section in a tire-width direction of a tire 1 according to the present embodiment. The basic structure of the tire 1 is left/right symmetric in the cross section of the tire-width direction; therefore, a cross-sectional view of the right half is shown herein. In the drawings, the reference symbol S1 is the tire equatorial plane. The tire equatorial plane S1 is a plane orthogonal to the tire rotation axis (tire meridian), and is positioned in the center of the tire-width direction.

Herein, tire-width direction is a direction parallel to the tire rotation axis, and is the left/right direction of the paper plane of the cross-sectional view in FIG. 1. In FIG. 1, it is illustrated as the tire-width direction X. Then, inner side of tire-width direction is a direction approaching the tire equatorial plane S1, and is the left side of the paper plane in FIG. 1. Outer side of tire-width direction is a direction distancing from the tire equatorial plane S1, and is the right side of the paper plane in FIG. 1. In addition, tire-radial direction is a direction perpendicular to the tire rotation axis, and is the vertical direction in the paper plane of FIG. 1. In FIG. 1, it is illustrated as the tire-radial direction Y. Then, outer side of tire-radial direction is a direction distancing from the tire rotation axis, and is the upper side of the paper plane in FIG. 1. Inner side of tire-radial direction is a direction approaching the tire rotation axis, and is the lower side of the paper plane in FIG. 1.

It should be noted that the cross-sectional view of FIG. 1 is a tire-width direction cross-sectional view (tire meridian axis cross-sectional view) in a state mounting the tire to a standard rim, and filling the standard internal pressure. It should be noted that standard rim indicates a rim serving as a standard decided by JATMA to correspond to the tire size. In addition, standard internal pressure is 180 kPa in the case of the tire being for a passenger vehicle, for example.

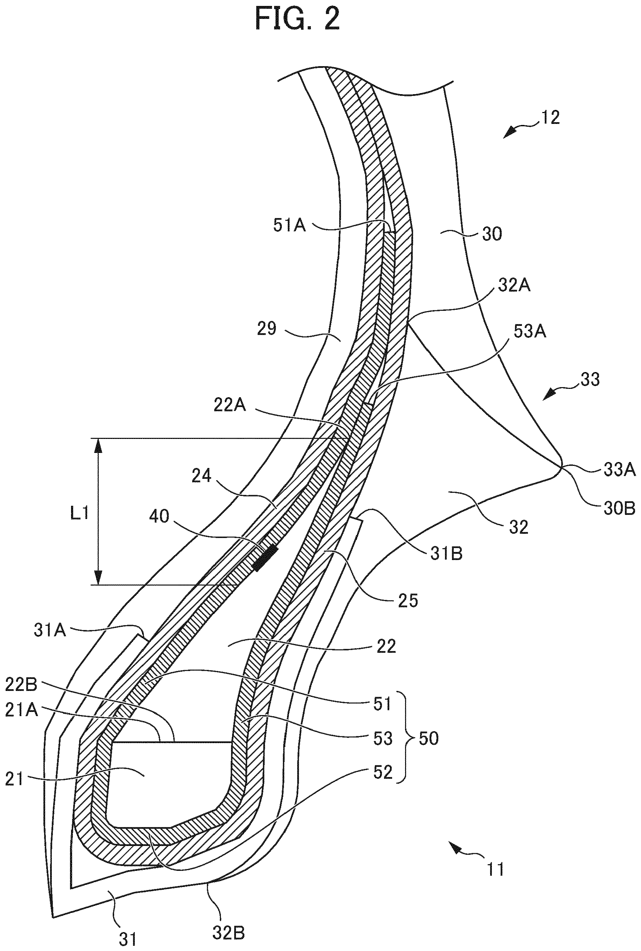

It should be noted that the aforementioned contents similarly apply to FIGS. 2, and 5 to 7.

The tire 1 is a tire for passenger cars, for example, and includes a pair of beads 11 provided at both sides in the tire-width direction, a sidewall 12 which extends from each of the beads 11 to the outer side in the tire-radial direction; and annular tread 13 which connects to the outer side in the tire-radial direction of each of the sidewalls 12 and extends in the circumferential direction of the tire constituting the tire tread (contact patch with road surface R) 13C.

FIG. 2 shows an enlarged cross-sectional view in the periphery in a tire-radial direction inside region of the bead 11 and sidewall 12 of the tire 1 of the present embodiment shown in FIG. 1.

The bead 11 includes a bead core 21, and bead filler 22 extending to the outer side in the tire-radial direction of the bead core 21.

The bead core 21 is an annular member formed by wrapping around several times bead wires made of metal coated with rubber, and is a member which plays a role of fixing the tire 1 filled with air to the rim (not shown) of a wheel.

The bead filler 22 is a rubber member of tapered tip shape, extending to the outer side in the tire-radial direction of the bead core 21. The bead filler 22 has a tire-radial direction outside end 22A and a tire-radial direction inside end 22B. The tire-radial direction inside end 22B of the bead filler 22 contacts with the tire-radial direction outside end 21A of the bead core 21. The bead filler 22 is a member provided in order to raise the rigidity of the bead peripheral part and to ensure high maneuverability and stability. The bead filler 22 is configured by rubber of higher hardness than the surrounding rubber members, for example. The modulus of rubber constituting the bead filler is higher than at least the modulus of rubber constituting the inner liner 29 described later and the rubber constituting the sidewall 30.

A carcass ply 23 bridging between the pair of beads 11 is embedded inside of the tire 1. The carcass ply 23 configures a ply serving as the backbone of the tire 1, and is embedded within the tire 1, in a form passing through the pair of sidewalls 12 and the tread 13 between the pair of beads 11.

The carcass ply 23 includes the ply body 24 which extends from one bead core 21 to the other bead core 21 and exists between the tread 13 and bead 11; and the ply folding part 25 which is folded back around the bead core 21. In the present embodiment, the ply folding part 25 is overlapped with the ply body 24 in the region of the sidewall 12. A ply folding part 25 has an end 25A. In the present embodiment, the end 25A of the ply folding part 25 is positioned in a region of the sidewall 12.

The carcass ply 23 is configured by a plurality of ply cords extending in the tire-width direction. In addition, a plurality of ply cords is arranged side by side in a tire circumferential direction. This ply cord is configured by an insulated organic fiber cord such as polyester or polyamide, or the like, and is covered by topping rubber. In the present embodiment, the ply coating constituting the carcass ply 23 is arranged radially (radial direction) from the center of the tire 1. In other words, the tire 1 of the present embodiment is a so-called radial tire in which ply cords are arranged so as to extend radially.

It should be noted that the carcass ply 23 of the present embodiment is a single-layer structure carcass ply 23 including one layer of a ply body 24. However, the carcass ply 23 may be a multi-layer structure carcass ply 23 including a plurality of layers of ply body 24.

The bead 11 further includes a chamfer 31, and rim strip rubber 32 arranged at the tire-width direction outer side of the chamfer 31.

The chafer 31 is provided so as to cover the carcass ply 23 provided around the bead core 21. In more detail, the chafer 31 is provided so as to cover the inner side in the tire-width direction, inner side in the tire-radial direction and outer side in the tire-width direction of the carcass ply 23 at the periphery of the bead core 21. The chafer 31 has a first end 31A arranged on the inner side in the tire-width direction of the ply body 24, and a second end 31B arranged at the outer side in the tire-width direction of the ply folding part 25 of the carcass ply 23. The chafer 31 is configured from rubber into which fibers were kneaded, or rubber of high modulus, for example, and the relative strength is high among constituent members constituting the tire 1. For example, the strength is higher than the inner liner 29 and side-wall rubber 30 described later.

The rim strip rubber 32 is a rubber member arranged on the outer side in the tire-width direction of the chafer 31 and the ply folding part 25 of the carcass ply 23, and upon the tire 1 being mounted to a wheel, the outer side in the tire-width direction thereof makes contact with the rim (not shown) of the wheel. The rim strip rubber 32 has a tire-radial direction outside end 32A and tire-radial direction inside end 32B. The outer side in the tire-radial direction of this rim strip rubber 32 connects to the side-wall rubber 30.

The flipper 50 is arranged at the bead 11. The flipper 50 is a reinforced fiber layer provided so as to cover the bead core 21. The flipper 50 raises the rigidity of the bead overall. The pressure bonding property between the bead 11 and rid is high, which can thereby suppress rim deviation of the bead 11. The flipper 50 is arranged to as to be sandwiched between the bead core 21 and carcass ply 23 provided around the bead core 21. In more detail, the flipper 50 includes a first portion 51 cover the inner side in the tire-width direction of the bead core 21, second portion 52 covering the inner side in the tire-radial direction, and third portion covering the outer side in the tire-width direction. The flipper 50 envelops at least part of the bead 11. In the present embodiment, the flipper 50 envelops at least part of the bead core 21 constituting the bead 11, by the first portion 51, second portion 52 and third portion 53. In the present embodiment, the flipper 50 envelops the bead core 21 constituting the bead 11, and the bead filler 22.

The first portion 51 extends more to the outer side in the tire-radial direction than the bead core 21. In the present embodiment, a tire-radial direction outside end 51A of the first portion 51 is arranged more to the outer side in the tire-radial direction than the tire-radial direction outside end 22A of the bead filler 22. The first portion 51 is arranged so as to cover the inner side in the tire-width direction of the bead filler 22, in addition to the inner side in the tire-width direction of the bead core 21.

The first portion 51 has a portion arranged to be sandwiched between the inner side in the tire-width direction of the bead core 21 and the ply body 24, and a portion arranged to be sandwiched between the inner side in the tire-width direction of the bead filler 22 and the ply body 24. In the present embodiment, the first portion 51 further includes: a portion arranged to be sandwiched between the ply body 24 and the third portion 53 of the flipper 50, and a portion arranged to be sandwiched between the ply body 24 and the ply folding part 25.

It should be noted that, in the present embodiment, the tire-radial direction outside end 51A of the first portion 51 is arranged at a tire-radial direction position of the sidewall 12 corresponding to a portion at which the tire inner cavity part is the widest in the tire-width direction. In this way, the tire-radial direction outside end 51A of the first portion 51 is preferably arranged at the tire-radial direction portion corresponding to a portion at which the tire inner cavity part is the widest in the tire-width direction, or more to the inner side in the tire-radial direction than this. In addition, the tire-radial direction outside end 51A of the first portion 51 may be arranged at a tire-radial direction position similarly to the tire-radial direction outside end 22A of the bead filler 22, or more to the inner side in the tire-radial direction than this. It is sufficient so long as the flipper 50 envelops at least part of the bead 11. The tire-radial direction position of the tire-radial direction outside end 51A of the first portion 51 is adjusted according to the rigidity demanded in the tire 1.

The second portion 52 is arranged to be sandwiched between the inner side in the tire-radial direction of the bead core 21 and the carcass ply 23.

The third portion 53 extends more to the outer side in the tire-radial direction than the bead core 21. In the present embodiment, the tire-radial direction outside end 53A of the third portion 53 is arranged more to the outer side in the tire-radial direction than the tire-radial direction outside end 22A of the bead filler 22. The third portion 53 is arranged so as to cover the outer side in the tire-width direction of the bead filler 22, in addition to the outer side in the tire-width direction of the bead core 21.

The third portion 53 has a portion arranged to be sandwiched between the outer side in the tire-width direction of the bead core 21 and the ply folding part 25, and a portion arranged to be sandwiched between the outer side in the tire-width direction of the bead filler 22 and the ply folding part 25. In the present embodiment, the third portion 53 further has a portion arranged to be sandwiched between the ply folding part 25 and the first portion 51 of the flipper 50.

It should be noted that, in the present embodiment, the tire-radial direction outside end 53A of the third portion 53 is arranged more to the inner side in the tire-radial direction than the tire-radial direction position of the sidewall 12 corresponding to the portion at which the tire inner cavity part is widest in the tire-width direction. The tire-radial direction outside end 53A of the third portion 53 is preferably arranged at a tire-radial direction position corresponding to a portion at which the tire inner cavity part is widest in the tire-width direction, or more to the inner side in the tire-radial direction than this. In addition, the tire-radial direction outside end 53A of the third portion 53 may be arranged at a tire-radial direction position similarly to the tire-radial direction outside end 22A of the bead filler 22, or more to the inner side in the tire-radial direction than this. It is sufficient so long as the flipper 50 envelops at least part of the bead 11. The tire-radial direction position of the tire-radial direction outside end 53A of the third portion 53 is adjusted according to the rigidity demanded in the tire 1.

It should be noted that, in the present embodiment, the tire-radial direction outside end 51A of the first portion 51 is positioned more to the outer side in the tire-radial direction than the tire-radial direction outside end 53A of the third portion 53. Therefore, the tire-radial direction outside end 51A of the first portion 51 constitutes the tire-radial direction outside end of the flipper 50. It should be noted that the tire-radial direction outside end 53A of the third portion 53 may be located more to the outer side in the tire-radial direction than the tire-radial direction outside end 51A of the first portion 51. In this case, the tire-radial direction outside end 53A of the third portion 53 constitutes the tire-radial direction outside end of the flipper 50.

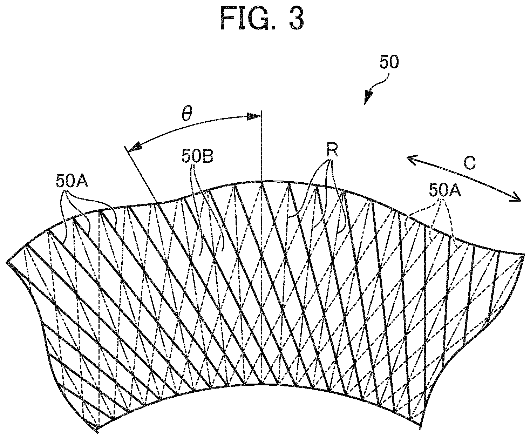

The flipper 50 of the present embodiment is configured from an organic fiber cord layer containing insulative organic fibers such as polyester and polyamide. FIG. 3 is a view for explaining the organic fiber cord layer constituting the flipper 50, and is a virtual view in the case of viewing the flipper 50 arranged within the tire 1 from the outer side in the tire-width direction towards the inner side in the tire-width direction. The flipper 50 is configured to include a plurality of cords 50A formed by twisting together a plurality of organic fibers, and rubber 50B as topping rubber integrating by coating the plurality of cords 50A. In FIG. 3, the plurality of cords 50A constituting the third portion 53 of the flipper 50 is shown by solid lines.

As shown in FIG. 3, the plurality of cords 50A constituting the flipper extends obliquely to the radial direction R, and is arranged at intervals in the tire circumferential direction C in the oblique state. The angle θ formed by the radial direction R of the tire 1 and the extending direction of the cord 50A of the flipper 50 is preferably at least 20° and no more than 50°. It should be noted that, in the present embodiment, the ply cords constituting the carcass ply 23 are arranged radially (radial direction) from the center of the tire 1. Consequently, in the present embodiment, the angle θ formed by the extending direction of the ply cords of the carcass ply 23 and the extending direction of the cord 50A of the flipper 50 is at least 20° and no more than 50°.

It should be noted that the flipper 50 is rolled back at the bead core 21. Consequently, the plurality of cords 50A constituting the first portion 51 of the flipper 50 slopes relative to the radial direction R as shown by the dashed line, in the opposite direction to the plurality of cords 50A constituting the third portion 53. Also in the first portion 51, the angle θ formed by the radial direction R of the tire 1 and the extending direction of the cords 50A of the flipper 50 is preferably at least 20° and no more than 50°.

The side-wall 12 includes the side-wall rubber 30 arranged on the outer side in the width direction of the carcass ply 23.

The side-wall rubber 30 is a rubber member configuring the outer wall surface of the tire 1. The side-wall rubber 30 has a tire-radial direction outside end 30A and tire-radial direction inside end 30B. This side-wall rubber 30 is a portion which bends the most upon the tire 1 exhibiting a cushioning action, and usually flexible rubber having fatigue resistance is adopted therein.

The tread 13 includes a steel belt 26 as a belt arranged on the outer side in the tire-radial direction of the carcass ply 23, a cap ply 27 arranged on the outer side in the tire-radial direction of the steel belt 26, and tread rubber 28 arranged on the outer side in the tire-radial direction of the cap ply 27.

The steel belt 26 is configured by a plurality of steel cords covered by rubber. By providing the steel belts 26, the rigidity of the tire 1 is ensured, and the contact state of the road surface with the tread 13 improves. In the present embodiment, the two-layer structure steel belt (steel belt 261 on the inner side and steel belt 262 on the outer side) is provided; however, the number of steel belts 26 layered is not limited thereto. It should be noted that a belt made using a tire cord or the like made using aramid fiber may be used in place of the steel belt 26 made using steel belts. It should be noted that, in the two-layer structure steel belt 26 of the present embodiment, the steel belt 261 on the inner side is wider than the steel belt 262 on the outer side. Therefore, the tire-width direction outside end of the steel belt 261 on the inner side includes the tire-width direction outside end 26A of the steel belt 26.

The cap ply 27 is a member arranged on the outer side in the tire-radial direction of the steel belt 26, and has a function as a belt reinforcement layer. The cap ply 27 is configured by an insulative organic fiber layer such as polyamide fiber, and is covered by topping rubber. By providing the cap ply 27, it is possible to achieve an improvement in durability and reduction in load noise while traveling. In the present embodiment, the tire-width direction outside end 27A of the cap ply 27 extends more to the outer side in the tire-width direction than the tire-width direction outside end 26A of the steel belt 26.

The tread rubber 28 is a member constituting tire tread (contact patch with road surface R) 13C. The tread rubber 28 has a tire-width direction outside end 28A. A tread pattern (not shown) constituted by a plurality of grooves is provided to the tire tread 13C of the tread rubber 28.

In the bead 11, sidewall 12 and tread 13, an inner liner 29 as a rubber layer constituting an inner wall surface of the tire 1 is provided to the tire inner cavity side of the carcass ply 23. The inner liner 29 is configured by air permeation resistant rubber, whereby the air inside the tire inner cavity is prevented from leaking to outside.

Herein, as shown in FIG. 1, the sidewall rubber 30 of the sidewall 12 extends towards the tread 13. On the other hand, the tread rubber 28 of the tread 13 extends towards the sidewall 12. As a result thereof, the tread rubber 28 and sidewall rubber 30 enter a layered state, on the tire outer surface side of a partial region of the carcass ply 23. In more detail, in a region in which the sidewall rubber 30 and tread rubber 28 both exist, i.e. movement region of the sidewall 12 and tread 13, the sidewall rubber 30 and tread rubber 28 are in a layered state in order, on the tire outer surface side of the carcass ply 23.

As shown in FIGS. 1 and 2, on the outer side in the tire-width direction of the bead 11 and carcass ply 23 of the sidewall 12, the rim strip rubber 32 and sidewall rubber 30 arranged on the outer side in the tire-radial direction of the rim strip rubber 32 are arranged. Then, in the present embodiment, the tire-radial direction outside end 32A of the rim strip rubber 32 is arranged more to the outer side in the tire-radial direction than the tire-radial direction outside end 22A of the bead filler 22. It is thereby possible to more effectively suppress local deformation from occurring in the vicinity of the rim mounting part.

In addition, as shown in FIGS. 1 and 2, in the vicinity of the movement region of the bead 11 and sidewall 12, the rim strip rubber 32 and sidewall rubber 30 enter a layered state in order on the tire outer surface side of the carcass ply 23. In addition, a rim protector 33 which has an apex part 33A projecting to the outer side in the tire-width direction and continuously extending in a ring shape in the tire circumferential direction is provided in this transition region vicinity. In the present embodiment, the apex part 33A of the rim protector 33 is provided at a boundary portion between the rim strip rubber 32 and side-wall rubber 30. In other words, the position of the apex part 33A of the rim protector 33 matches the position of the tire-radial direction inside end 30B of the side-wall rubber 30. The rim protector 33 has a function of protecting the rim from external damage.

In addition, as shown in FIGS. 1 and 2, the first end 31A of the chamfer 31 is arranged so as to be sandwiched between the ply body 24 of the carcass ply 23 and the inner liner 29. The second end 31B of the chamfer 31 is arranged so as to be sandwiched between the ply folding part 25 of the carcass ply 23 and the rim strip rubber 32.

In the present embodiment, as shown in FIG. 1, the ply folding part 25 extends until the tread 13. Then, the end 25A of the ply folding part 25 is arranged more to the inner side in the tire-width direction than the tire-width direction outside end 26A of the steel belt 26. In other words, in the tire-width direction outside region of the tread 13, the ply folding part 25 and steel belt 26 are in a layered state in order, on the tire outer surface side of the ply body 24. In this way, the ply folding part 25 and steel belt 26 have an overlapping portion in a member lamination direction from the tire inner cavity side towards the tire outer surface side. It is thereby possible to raise the rigidity of the tire overall. However, the ply folding part 25 and steel belt 26 do not necessarily have an overlapping portion in the member lamination direction from the tire inner cavity side toward the tire outer surface side.

Herein, as shown in FIG. 1, the flipper 50 and steel belt 26 do not have an overlapping portion in the member lamination direction from the tire inner cavity side toward the tire outer surface side. More specifically, the flipper 50 does not extend until the tread 13. In the present embodiment, the tire-radial direction outside end 51A of the flipper 50 is located at the sidewall 12. In other words, although the flipper 50 extends until the sidewall 12, it does not extend until the tread 13. On the other hand, the tire-width direction outside end 26A of the steel belt 26 of the tread 13 is located at the tread 13, and does not extend until the sidewall 12. In this way, since the steel belt 26 and flipper 50 do not have an overlapping portion, even in the case of a large load acting on the tire due to puncture or the like, and a great force acting on the steel belt 26, it is possible to suppress this force from transmitting directly to the flipper 50.

An RFID tag 40 is embedded as an electrical component in the tire 1 of the present embodiment. The RFID tag 40 is a passive transponder equipped with an RFID chip and an antenna for performing communication with external equipment, and performs wireless communication with a reader (not illustrated) serving as the external equipment. As the antenna, a coil-shaped spring antenna, plate-shaped antenna, and various types of rod-shaped antennas can be used. For example, it may be an antenna formed by printing a predetermined pattern on a flexible substrate. The antenna is established at an antenna length optimized according to the frequency band, etc. to be used. In a storage part inside the RFID chip, identification information such as a manufacturing number and part number is stored.

As shown in FIG. 1 and FIG. 2, the RFID tag 40 is arranged so as to make contact with the flipper 50. According to this configuration, the RFID tag 40 is hardly affected by distortion of the tire, etc. while travelling, due to the movement being restricted by the flipper 50 serving as a reinforced fiber layer. Consequently, it is possible to improve the durability of the RFID tag 40, without using additional components. In addition, according to the present embodiment, the impact protection also improves. In other words, even if the tire receives external impact, since the carcass ply 23 as a fiber layer is present between the outer wall surface of the tire 1 and the RFID tag 40, it is possible to decrease the load on the RFID tag 40.

In the present embodiment, specifically, the RFID tag 40 is arranged between the bead filler 22 and the flipper 50. In this way, since the RFID tag 40 is provided between the bead filler 22 of high modulus and the flipper 50 which is a reinforced fiber layer, the periphery of the RFID tag 40 has little deformation, and stress hardly concentrates. Consequently, the RFID tag 40 is hardly damaged. Then, since the ply folding part 25 as a fiber layer and the third portion 53 of the flipper 50 as a reinforced fiber layer are present between the outer wall surface of the tire 1 and the RFID tag 40, it is possible to further decrease the load on the RFID tag 40.

In the present embodiment, more specifically, the RFID tag 40 is arranged between the inner side in the tire-width direction of the bead filler 22 and the first portion 51 of the flipper 50. In other words, the ply folding part 25 as a fiber layer, the third portion 53 of the flipper 50 as a reinforced fiber layer and the bead filler 22 are present between the outer wall surface of the tire 1 and the RFID tag 40. In this way, it is possible to further decrease the load on the RFID tag 40, by the RFID tag 40 being arranged at the inner side in the tire-width direction of the bead filler 22, and the distance from the outer wall surface of the tire 1 to the RFID tag 40 becoming farther.

It should be noted that, in the present embodiment, the RFID tag 40 is arranged more to an inner side in the tire-radial direction than the second end 31B of the chamfer 31. Even in the case of a force acting from outside, it is thereby possible to further decrease the load on the RFID tag 40. It should be noted that, in the present embodiment, the RFID tag 40 is arranged more to the outer side in the tire-radial direction than the first end 31A of the chamfer 31.

As shown in FIGS. 1 and 2, the RFID tag 40 is preferably arranged at a position closer to the tire-radial direction outside end 22A than the tire-radial direction inside end 22B of the bead filler 22. More preferably, the RFID tag 40 has at least a part thereof arranged more to the outer side in the tire-radial direction than a position 10 mm to the inner side in the tire-radial direction from the tire-radial direction outside end 22A of the bead core. More preferably, the entire portion including the antenna of the RFID tag 40 is arranged more to the outer side in the tire-radial direction than a position 10 mm to the inner side in the tire-radial direction from the tire-radial direction outside end 22A of the bead core. For example, the RFID tag 40 of the present embodiment is preferably arranged in an area range L1 of 10 mm from the tire-radial direction outside end 22A to the inner side in the tire-radial direction of the bead filler 22, as shown in FIGS. 1 and 2. In other words, the RFID tag 40 preferably has at least a part which is arranged within a position 10 mm to the inner side in the tire-radial direction from the tire-radial direction outside end 22A of the bead filler 22. For example, the RFID tag 40 preferably has at least a part which is arranged within a distance 2 mm to 10 mm to the inner side in the tire-radial direction from the tire-radial direction outside end 22A of the bead filler 22.

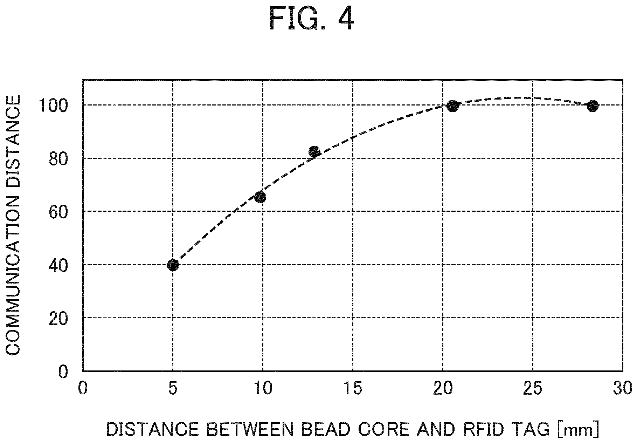

FIG. 4 shows the result of examining the relationship of the communication distance relative to the separation distance of the RFID tag 40 from the tire-radial direction outside end 21A of the bead core 21. It should be noted that the communication distance on the vertical axis is a value indexing the communication distance with the longest communication distance as 100. It is sufficient if this value is at least 40, is preferably at least 60, and even more preferably at least 80.

The bead core 21 is formed in a ring shape by laminating and winding a bead wire made of metal; therefore, it is a metal member having a particularly high possibility of adversely influencing communication. It is understood from FIG. 4 that the RFID tag 40 is better arranged at a position distanced as much as possible from the bead core 21. As shown in the present embodiment, it is possible to suppress the negative influence on communication, by arranging the RFID tag 40 in an area range L1 of 10 mm from the tire-radial direction outside end 22A of the bead filler 22. It is thereby possible to secure favorable communicability between the RFID tag 40 and an external reader.

Herein, the RFID tag 40 of the present embodiment is installed in the tire constituent member before the vulcanization process in the manufacturing process of the tire 1. More specifically, the RFID tag 40 is installed in the bead filler 22 or flipper 50. At this time, the bead filler 22 and the topping rubber 50B of the flipper 50 are in the state of raw rubber prior to vulcanization. Consequently, using the adhesiveness of raw rubber, the RFD tag 40 is installed to the bead filler 22 or flipper 50. It should be noted that the RFID tag 40 may be installed using an adhesive or the like. Subsequently, the RFID tag 40 is inserted between the bead filler 22 and flipper 50. After inserted, the green tire in which each tire constituent member including the RFID tag 40 was assembled is vulcanized in the vulcanization step to produce the tire.

In the present embodiment, it is thereby possible to paste the RFID tag 40 to the flipper 50 as a reinforced fiber layer or the bead filler 22 covered by the raw rubber having rigidity and having adhesiveness, during tire production. Consequently, in the manufacturing process of the tire, the assembly work of the RFID tag 40 becomes easy.

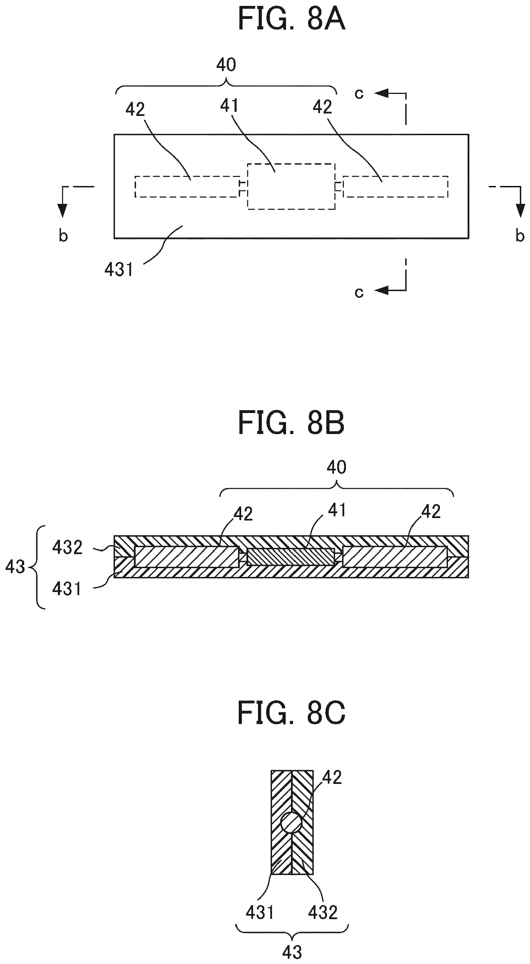

It should be noted that the RFID tag 40 embedded in the tire 1 often has a longitudinal direction if including an antenna, as shown as the RFID 40 in FIG. 8A described later. Such an RFID tag 40 is preferably embedded in the tire 1 so that the longitudinal direction thereof becomes the direction of the tangential line relative to the circumferential direction of the tire, for example, i.e. direction orthogonal to the paper plane in the cross-sectional views of FIGS. 1 and 2. By embedding in this way, stress will hardly act on the RFID tag 40 when the tire 1 deforms.

It should be noted that, in the present embodiment, although the RFID tag 40 is embedded in the tire as an electronic component, the electronic component embedded in the tire is not limited to an RFID tag. For example, it may be various electronic components such as a sensor which carries out wireless communication. In addition, when the electronic component electrically contacts with a conductive member, a performance change in the electronic component arises, and there is a possibility of becoming difficult to maintain the characteristics of the electronic component. In addition, there is a possibility of the electronic component being damaged by excessive stress being applied. Consequently, even in the case of embedding various electronic components in a tire, it is possible to obtain the effects of the present invention. For example, the electronic component may be a piezoelectric element or strain sensor.

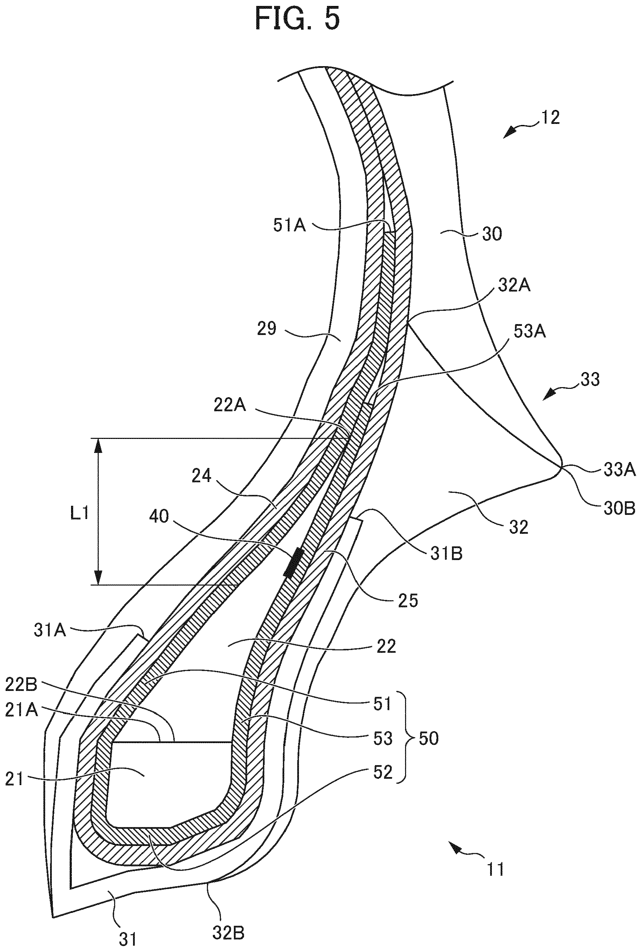

FIG. 5 is an enlarged cross-sectional view of a half section in the tire-width direction of a tire 1 according to a first modified example of the present embodiment.

As shown in FIG. 5, the RFID tag 40 of the present modified example is arranged between the outer side in the tire-width direction of the bead filler 22 and the third portion 53 of the flipper 50.

Also in the present modified example, the RFID tag 40 is arranged so as to make contact with the flipper 50 Consequently, the RFID tag 40 is hardly affected by distortion of the tire, etc. while travelling, due to the movement being restricted by the flipper 50 serving as a reinforced fiber layer.

In addition, in the present modified example, since the RFID tag 40 is arranged between the bead filler 22 of high modulus and the flipper 50 which is a reinforced fiber layer, the periphery of the RFID tag 40 has little deformation, and stress hardly concentrates. Consequently, the RFID tag 40 is hardly damaged.

Then, in the present modified example, between the outer wall surface of the tire 1 and the RFID tag 40, since the ply folding part 25 as a fiber layer and the third portion 53 of the flipper 50 as the reinforced fiber layer are present, it is possible to decrease the load on the RFID tag 40.

Then, in the present modified example, since the RFID tag 40 is arranged at a position relatively close to the outer surface of the tire, the communication property between the outside and RFID tag 40 is good.

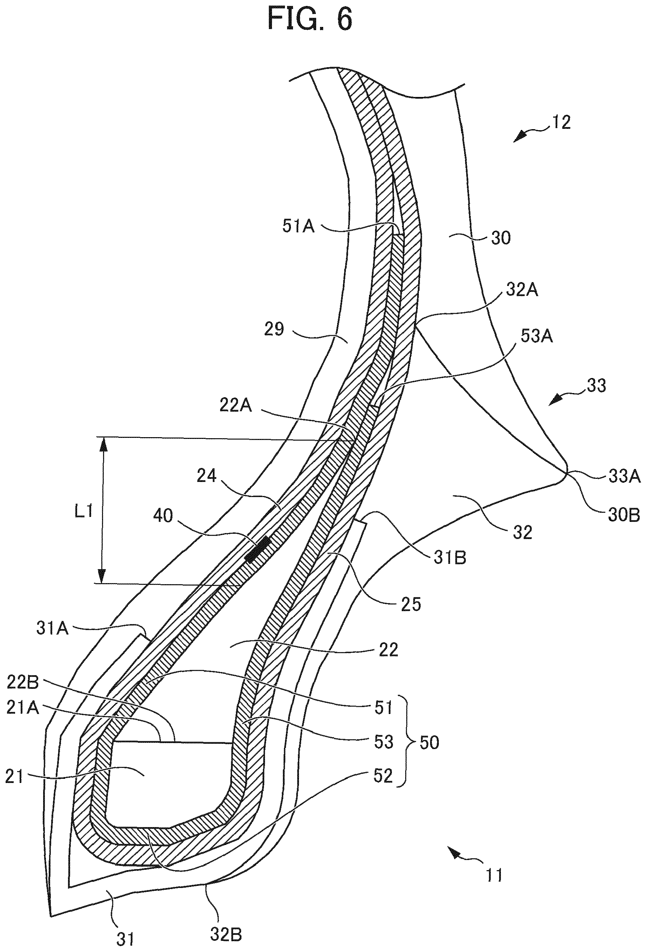

FIG. 6 is an enlarged cross-sectional view of a half section in the tire-width direction of a tire 1 according to a second modified example of the present embodiment.

As shown in FIG. 6, the RFID tag 40 of the present modified example is arranged between the carcass ply 23 and the flipper 50. More specifically, the RFID tag 40 is arranged between the ply body 24 of the carcass ply 23 and the first portion 51 of the flipper 50.

Also in the present modified example, the RFID tag 40 is arranged so as to make contact with the flipper 50 Consequently, the RFID tag 40 is hardly affected by distortion of the tire, etc. while travelling, due to the movement being restricted by the flipper 50 serving as a reinforced fiber layer.

Then, in the present modified example, since the RFID tag 40 is provided between the carcass ply 23 as a fiber layer and the flipper 50 as a reinforced fiber layer, the periphery of the RFID tag 40 has little deformation, and stress hardly concentrates. Consequently, the RFID tag 40 is hardly damaged. In addition, during vulcanization and during use, it is possible to prevent the RFID tag 40 from directly pressing the surrounding rubber members such as the inner liner 29 and bead filler 22. Consequently, the surrounding rubber members are hardly damaged.

Then, in the present modified example, between the outer wall surface of the tire 1 and the RFID tag 40, the ply folding part 25 as a fiber layer, third portion 53 and first portion 51 of the flipper 50 as the reinforced fiber layer, and bead filler 22 are present. In this way, it is possible to further decrease the load on the RFID tag 40, by the RFID tag 40 being arranged at the inner side in the tire-width direction of the bead filler 22, and the distance from the outer wall surface of the tire 1 to the RFID tag 40 becoming farther.

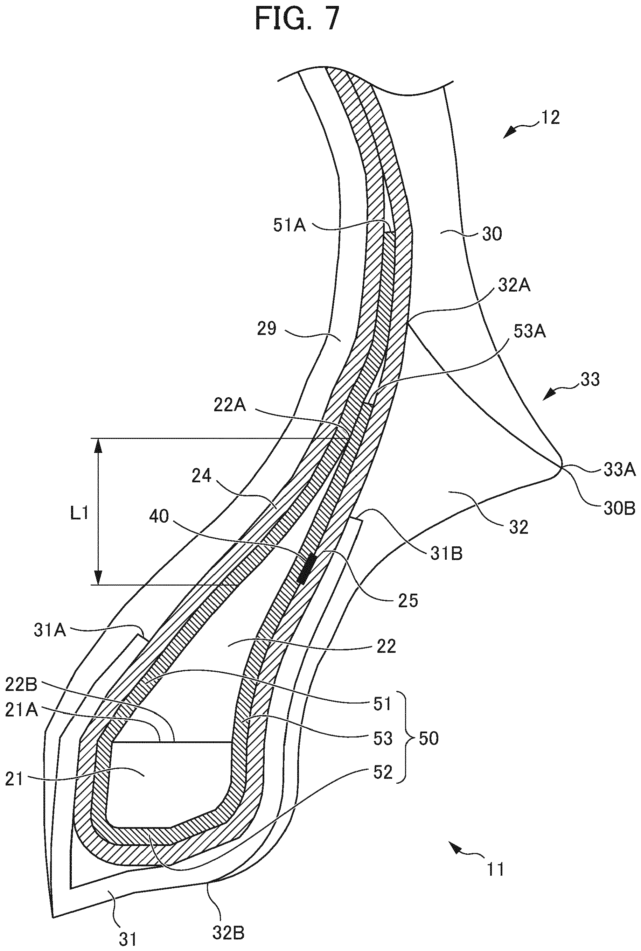

FIG. 7 is an enlarged cross-sectional view of a half section in the tire-width direction of a tire 1 according to a third modified example of the present embodiment.

As shown in FIG. 7, the RFID tag 40 of the present modified example is arranged between the carcass ply 23 and the flipper 50. More specifically, the RFID tag 40 is arranged between the ply folding part 25 of the carcass ply 23 and the third portion 53 of the flipper 50.

Also in the present modified example, the RFID tag 40 is arranged so as to make contact with the flipper 50 Consequently, the RFID tag 40 is hardly affected by distortion of the tire, etc. while travelling, due to the movement being restricted by the flipper 50 serving as a reinforced fiber layer.

Then, also in the present modified example, since the RFID tag 40 is provided between the carcass ply 23 as a fiber layer and the flipper 50 as a reinforced fiber layer, the periphery of the RFID tag 40 has little deformation, and stress hardly concentrates. Consequently, the RFID tag 40 is hardly damaged. In addition, during vulcanization and during use, it is possible to prevent the RFID tag 40 from directly pressing the surrounding rubber members such as the inner liner 29 and bead filler 22. Consequently, the surrounding rubber members are hardly damaged.

Then, in the present modified example, between the outer wall surface of the tire 1 and the RFID tag 40, since the ply folding part 25 as a fiber layer is present, it is possible to decrease the load on the RFID tag 40.

Then, in the present modified example, since the RFID tag 40 is arranged at a position relatively close to the outer surface of the tire, the communication property between the outside and RFID tag 40 is favorable.

It should be noted that the RFID tag 40 may be arranged more to the outer side in the tire-radial direction than the tire-radial direction outside end 22A of the bead filler 22. For example, the flipper 50 may include an inner side part (first portion 51) covering the inner side in the tire-width direction of the bead core 21 and bead filler 22, and an outer side part (third portion 53) covering the outer side in the tire-width direction of the bead core 21 and bead filler 22, and the RFID tag 40 may be arranged between the inner side part (first portion 51) of the flipper 50 and the outer side part (third portion 53) of the flipper 50, more to the outer side in the tire-radial direction than the tire-radial direction outside end 22A of the bead filler 22. In this case, the inner side part (first portion 51) and outer side part (third portion 53) of the flipper 50 extend more to the outer side in the tire-radial direction than the tire-radial direction outside end 22A of the bead filler 22.

Also in such a configuration, the RFID tag 40 is arranged so as to make contact with the flipper 50. Consequently, the RFID tag 40 is hardly affected by distortion of the tire, etc. while travelling, due to the movement being restricted by the flipper 50 serving as a reinforced fiber layer.

Then, in such a configuration, since the RFID tag 40 is provided between the inner side part (first portion 51) and outer side part (third portion 53) of the flipper 50 which is a reinforced fiber layer, the periphery of the RFID tag 40 has little deformation, and stress hardly concentrates. Consequently, the RFID tag 40 is hardly damaged. In addition, during vulcanization and during use, it is possible to prevent the RFID tag 40 from directly pressing the surrounding rubber members such as the inner liner 29 and bead filler 22. Consequently, the surrounding rubber members are hardly damaged.

Furthermore, if such a configuration, by a simple operation such as arranging the RFID tag 40 at the flipper 50 and winding the flipper 50 on which the RFID tag 40 is arranged around the bead core 21 and bead filler 22 during production, it is possible to embed the RFID tag 40 in the tire so as to make contact with the flipper 50.

According to the tire 1 of the present embodiment, the following effects are exerted.
(1) The tire 1 according to the present embodiment includes: a pair of beads 11 having a bead core 21 and a bead filler 22 which extends to an outer side in a tire-radial direction of the bead core 21; a flipper 50 which envelops at least part of the bead core 21; a carcass ply 23 which has a ply body 24 extending from one bead 11 to another bead 11, and a ply folding part 25 which is folded back at the bead 11, and which envelopes the flipper 50; and the RFID tag 40 as an electronic component embedded within the tire so as to make contact with the flipper 50. In this way, since the RFID tag 40 is arranged in a state making contact with the flipper 50 which is the reinforcement fiber layer, it is possible to protect the RFID tag 40.
(2) The tire 1 according to the present embodiment includes: the annular tread 12 which extends in the circumferential direction of the tire; a pair of beads 11 having a bead core 21 and a bead filler 22 which extends to an outer side in a tire-radial direction of the bead core 21; the carcass ply 23 having the ply body 24 extending from one bead core 21 to the other bead core 21, and the ply folding part 25 which is folded back around the bead core 21; the flipper 50 disposed between the bead core 21 and carcass ply 23; and the RFID tag 40 as an electronic component embedded within the tire so as to make contact with the flipper 50, in which the tread 13 has a steel belt 26 as a belt disposed on the outer side in the tire-radial direction of the carcass ply 23, and the flipper 50 and the steel belt 26 do not have an overlapping portion in the member lamination direction from the tire inner cavity side to the tire outer surface side. In this way, since the RFID tag 40 is arranged in a state making contact with the flipper 50 which is the reinforced fiber layer that does not have a portion overlapping with the steel belt 26, it is possible to protect the RFID 40 even in a case of the tire greatly distorting and case of shock applying to the tire 1.
(3) The RFID tag 40 according to the present embodiment is arranged between the bead filler 22 and the flipper 50. In this way, by the RFID tag 40 being arranged between the bead filler 22 of high modulus and the flipper 50, the deformation in the vicinity of the RFID tag 40 becomes small, and stress hardly concentrates. Consequently, the RFID tag 40 is hardly damaged.
(4) The RFID tag 40 of the tire 1 according to the present embodiment is disposed between the inner side in the tire-width direction of the bead filler 22 and the flipper 50. In this way, by the RFID tag 40 being arranged at a position far from the outer surface of the tire 1, it is possible to further decrease the load on the RFID tag 40.
(5) The RFID tag 40 of the tire 1 according to the present embodiment is disposed between the outer side in the tire-width direction of the bead filler 22 and the flipper 50. In this way, by the RFID tag 40 being arranged at a position close to the outer surface of the tire 1, the communication property between the outside and the RFID tag 40 becomes favorable.
(8) The RFID tag 40 of the tire 1 according to the present embodiment is disposed between the carcass ply 23 and the flipper 50. In this way, by the RFID tag 40 being arranged between the carcass ply 23 and flipper 50, it is possible to prevent the RFID tag 40 from directly pressing the rubber structure of the tire, during vulcanization and during use.
(7) The RFID tag 40 of the tire 1 according to the present embodiment is disposed between the ply body 24 and the flipper 50. In this way, by the RFID tag 40 being arranged at a position far from the outer surface of the tire 1, it is possible to further decrease the load on the RFID tag 40.
(8) The RFID tag 40 of the tire 1 according to the present embodiment is disposed between the ply folding part 25 and the flipper 50. In this way, by the RFID tag 40 being arranged at a position close to the outer surface of the tire 1, the communication property between the outside and the RFID tag 40 becomes favorable.
(9) The flipper 50 of the tire 1 according to the present embodiment includes: the inner side part (first portion 51) covering the inner side in the tire-width direction of the bead core 21 and the bead filler 22; and the outer side part (third portion 53) covering the outer side in the tire-width direction of the bead core 21 and the bead filler 22, in which the RFID tag 40 is disposed more to the outer side in the tire-radial direction than the tire-radial direction outside end 22A of the bead filler 22, between the inner side part (first portion 51) of the flipper 50 and the outer side part (third portion 53) of the flipper 50. In this way, by the RFID tag 40 being arranged between the inner side part and outer side part of the flipper 50, it is possible to prevent the RFID tag 40 from directly pressing the rubber structure of the tire, during vulcanization and during use.
(10) The RFID tag 40 of the tire 1 according to the present embodiment has at least a part disposed within a position 10 mm from the tire-radial direction outside end 22A of the bead filler 22 to the inner side in the tire-radial direction. It is thereby possible to secure the good communication property between the outside and the RFID tag 40.
(11) The flipper 50 of the tire 1 according to the present embodiment contains an organic fiber cord layer. It is thereby possible to effectively reinforce the bead 11.

### <Second Embodiment>

Next, a tire 1 according to a second embodiment will be explained while referencing FIGS. 8A to 8C. It should be noted that, in the following explanation, the same reference symbols are assigned to configurations which are identical to the first embodiment, and detailed explanations thereof will be omitted. In the present embodiment, the RFID tag 40 is covered by a protective member 43 configured from a rubber sheet.

FIG. 8A is a view showing the RFID tag 40 covered by the protective member 43 configured from a rubber sheet. In FIG. 8A, the RFID tag 40 is covered and hidden by the rubber sheet 431 described later. FIG. 8B is a cross-sectional view along the line b-b in FIG. 8A, and FIG. 8C is a cross-sectional view along the line c-c in FIG. 8A. In the present embodiment, the RFID tag 40 is covered by the protective member 43, as shown in FIGS. 8A to 8C.

The RFID tag 40 includes the RFID chip 41 and the antenna 42 for performing communication with external equipment. As the antenna 42, a coil-shaped spring antenna, plate-shaped antenna, and various types of rod-shaped antennas can be used. For example, it may be an antenna formed by printing a predetermined pattern on a flexible substrate. When considering the communicability and flexibility, a coil-shaped spring antenna is the most preferable.

The protective member 43 is configured from two rubber sheets 431, 432 which protect the RFID tag 40 by sandwiching.

The protective member 43 is configured from rubber of predetermined modulus, for example. Herein, the modulus indicates 100% elongation modulus (M100) under a 23°C atmosphere, measured in accordance with "3.7 stress at a given elongation, S" of JIS K6251:2010.

As the rubber adopted in the protective member 43, rubber at least having a higher modulus than the side wall rubber 30 is used.

For example, with the modulus of the side wall rubber 30 as a reference, as the rubber used in the protective member 43, it is preferable to use rubber of a modulus 1.1 to 2 times.

In addition, the protective member 43 may be configured from a short-fiber filler mixed rubber. As the short-fiber filler, for example, it is possible to use insulating short fibers like organic short fibers such as aramid short fibers and cellulose short fibers; inorganic short fibers such as ceramic short fibers as in alumina short fiber, and glass short fiber. By mixing such short-fiber fillers into rubber, it is possible to raise the strength of the rubber. In addition, as the protective member 43, a rubber sheet in the vulcanized state may be used. The rubber sheet in a vulcanized state does not plastically deform as raw rubber, and thus can appropriately protect the RFID tag 40.

In addition, as the protective member 43, an organic fiber layer from polyester fibers or polyamide fibers may be provided. It is also possible to embed an organic fiber layer in the two rubber sheets 431, 432.

In this way, if configuring the protective member 43 by the two rubber sheets 431, 432, since it is possible to thinly form the RFID tag 40 including the protective member 43, it is suitable upon embedding the tire 1. In addition, when assembling the RFID tag 40 to the constituent members of the tire 1 prior to vulcanization, the RFID tag 40 covered by the rubber sheets 431, 432 can be installed very easily. For example, at a desired position of each rubber member prior to vulcanization, it is possible to appropriately paste the RFID tag 40 covered by the rubber sheets 431, 432 using the adhesiveness of the raw rubber. In addition, by also establishing the rubber sheets 431, 432 as raw rubber prior to vulcanization, it is possible to more easily paste by employing the adhesiveness of the rubber sheets 431, 432 itself as well.

However, the protective member 43 is not limited to the form configured by two rubber sheets 431, 432, and can adopt various forms. For example, so long as the rubber sheets constituting the protective member are covering at least part of the RFID tag 40, effects can be obtained such as an improvement in workability in the manufacturing process and stress mitigation. In addition, for example, it may be a configuration wrapping one rubber sheet around the entire circumference of the RFID tag 40, or a configuration attaching the protective member in the form of a potting agent of high viscosity along the entire circumference of the RFID tag 40. Even if such a configuration, it will be possible to appropriately protect the RFID tag 40.

It should be noted that, in the second modified example and third modified example shown in FIG. 6 and FIG. 7, for example, in the case of adopting the configuration protecting the RFID tag 40 by the protective member 43, the RFID tag 40 comes to be sandwiched between the carcass ply 23 and flipper 50, in a state covered by the protective member 43. In this case, even in a situation where the RFID tag 40 is subjected to stress by the carcass ply 23 and flipper 50 relatively moving, the RFID tag 40 is protected by the existence of the protective member 43. Consequently, the durability of the RFID tag 40 further improves.

It should be noted that the RFID tag 40 covered by the protective member 43 is embedded in the tire 1 so that the longitudinal direction thereof becomes the direction of the tangential line relative to the circumferential direction of the tire 1, i.e. direction orthogonal to the paper plane in the cross-sectional views of FIGS. 1, 2, and 5 to 7. In the manufacturing process, one surface of either one of the rubber sheets 431 and 432 is installed to the constituent members of the tire 1 prior to vulcanization.

By establishing such a form, stress will hardly act on the RFID tag 40, even when the tire 1 deforms. In addition, in the manufacturing process, the work of attaching the RFID tag 40 covered by the protective member 43 becomes easy.

According to the tire 1 according to the present embodiment, the following effects is exerted in addition to the above (1) to (11).

(12) In the present embodiment, the RFID tag 40 is covered by the rubber sheets 431, 432. The workability in the manufacturing process thereby improves. In addition, effects such as mitigating the stress acting on the RFID tag 40 are obtained.

It should be noted that the tire of the present invention can be adopted as various types of tires such as of a car, light truck, truck or bus; however, it is particularly suitable as a tire for a car. It should be noted that the present invention is not to be limited to the above-mentioned embodiment, and even if conducting modifications, improvements, etc. within a scope of the appended claims, will be encompassed in the scope of the present invention.

### EXPLANATION OF REFERENCE NUMERALS

1 tire
11 bead
12 sidewall
13 tread
21 bead core
22 bead filler
22A tire-radial direction outside end
23 carcass ply
24 ply body
25 ply folding part
26 steel belt (belt)
27 cap ply
28 tread rubber
29 inner liner
30 sidewall rubber
31 chamfer
32 rim strip rubber
40 RFID tag (electronic component)
50 flipper
51 first portion (inner side part)
52 second portion
53 third portion (outer side part)

## Claims

1. A tire (1) comprising:
a pair of beads (11) having a bead core (21) and a bead filler (22) which extends to an outer side in a tire-radial direction of the bead core (21);
a flipper (50) which envelops at least part of the bead (11) ;
a carcass ply (23) which has a ply body (24) extending from one bead (11) to another bead (11), and a ply folding part (25) which is folded back at the bead (11), and which envelopes the flipper (50); and
an electronic component (40) embedded within the tire so as to make contact with the flipper (50),
**characterized in that**
the electronic component (40) is disposed between the bead filler (22) and the flipper (50).

2. The tire (1) according to claim 1, wherein the electronic component (40) is disposed between an inner side in a tire-width direction of the bead filler (22) and the flipper (50).

3. The tire (1) according to claim 1, wherein the electronic component (40) is disposed between an outer side in a tire-width direction of the bead filler (22) and the flipper (50).

4. The tire (1) according to any one of claims 1 to 3, wherein the electronic component (40) has at least a part which is disposed within a position which is 10 mm from the tire-radial direction outside end of the bead filler (22) to an inner side in the tire-radial direction.

5. A tire (1) comprising:
a pair of beads (11) having a bead core (21) and a bead filler (22) which extends to an outer side in a tire-radial direction of the bead core (21);
a flipper (50) which envelops at least part of the bead (11) ;
a carcass ply (23) which has a ply body (24) extending from one bead (11) to another bead (11), and a ply folding part (25) which is folded back at the bead (11), and which envelopes the flipper (50); and
an electronic component (40) embedded within the tire so as to make contact with the flipper (50),
**characterized in that**
the flipper (50) includes an inner side part (51) covering an inner side in the tire-width direction of the bead core (21) and the bead filler (22), and an outer side part (53) covering an outer side in the tire-width direction of the bead core (21) and the bead filler (22),
wherein the electronic component (40) is disposed more to an outer side in the tire-radial direction than a tire-radial direction outside end of the bead filler (22), between the inner side part (51) of the flipper (50) and the outer side part (53) of the flipper (50).

6. The tire according to any one of claims 1 to 5, wherein the flipper (50) contains an organic fiber cord layer.

## Patentansprüche

1. Reifen (1) aufweisend:
ein Paar Wülste (11) mit einem Wulstkern (21) und einem Kernreiter (22), der sich zu einer Außenseite in einer Reifenradialrichtung des Wulstkerns (21) erstreckt;
eine Wulstfahne (50), die zumindest einen Teil der Wulst (11) umschließt;
eine Karkassenlage (23), die einen Lagenkörper (24), der sich von einer Wulst (11) zu einer anderen Wulst (11) erstreckt, und einen Lagenfaltteil (25), der an der Wulst (11) zurückgefaltet ist und der die Wulstfahne (50) umschließt, aufweist; und
eine elektronische Komponente (40), die innerhalb des Reifens so eingebettet ist, dass sie die Wulstfahne (50) kontaktiert,
**dadurch gekennzeichnet, dass**
die elektronische Komponente (40) zwischen dem Kernreiter (22) und der Wulst (50) angeordnet ist.

2. Reifen (1) nach Anspruch 1, wobei die elektronische Komponente (40) zwischen einer Innenseite in einer Reifenbreitenrichtung des Kernreiters (22) und der Wulstfahne (50) angeordnet ist.

3. Reifen (1) nach Anspruch 1, wobei die elektronische Komponente (40) zwischen einer Außenseite in einer Reifenbreitenrichtung des Kernreiters (22) und der Wulstfahne (50) angeordnet ist.

4. Reifen (1) nach einem der Ansprüche 1 bis 3, wobei die elektronische Komponente (40) zumindest einen Teil aufweist, der innerhalb einer Position, die 10 mm von dem in Reifenradialrichtung äußeren Ende des Kernreiters (22) zu einer Innenseite in der Reifenradialrichtung entfernt ist, angeordnet ist.

5. Reifen (1), aufweisend:
ein Paar Wülste (11) mit einem Wulstkern (21) und einem Kernreiter (22), der sich zu einer Außenseite in einer Reifenradialrichtung des Wulstkerns (21) erstreckt;
eine Wulstfahne (50), die zumindest einen Teil der Wulst (11) umschließt;
eine Karkassenlage (23), die einen Lagenkörper (24), der sich von einer Wulst (11) zu einer anderen Wulst (11) erstreckt, und einen Lagenfaltteil (25), der an der Wulst (11) zurückgefaltet ist und der die Wulstfahne (50) umschließt, aufweist; und
eine elektronische Komponente (40), die innerhalb des Reifens so eingebettet ist, dass sie die Wulstfahne (50) kontaktiert,
**dadurch gekennzeichnet, dass**
die Wulstfahne (50) einen inneren Seitenteil (51), der eine Innenseite in der Reifenbreitenrichtung des Wulstkerns (21) und des Kernreiters (22) bedeckt, und einen äußeren Seitenteil (53), der eine Außenseite in der Reifenbreitenrichtung des Wulstkerns (21) und des Kernreiters (22) bedeckt, aufweist,
wobei die elektronische Komponente (40) weiter zu einer Außenseite in der Reifenradialrichtung angeordnet ist als ein in Reifenradialrichtung äußeres Ende des Kernreiters (22) zwischen dem inneren Seitenteil (51) der Wulstfahne (50) und dem äußeren Seitenteil (53) der Wulstfahne (50).

6. Reifen nach einem der Ansprüche 1 bis 5, wobei die Wulstfahne (50) eine organische Faserkordschicht enthält.

## Revendications

1. Pneumatique (1) comprenant :
une paire de talons (11) comportant une tringle (21) de talon et un bourrage (22) sur tringle s'étendant vers un côté externe, dans le sens radial du pneumatique, de la tringle (21) de talon ;
une languette (50) entourant au moins une partie du talon (11) ;
un pli de carcasse (23) comportant un corps (24) de pli s'étendant d'un talon (11) à l'autre talon (11), et une partie (25) de pliage de pli, laquelle est repliée au niveau du talon (11), et entoure la languette (50) ; et
un composant électronique (40) incorporé à l'intérieur du pneumatique afin de se mettre en contact avec la languette (50),
**caractérisé en ce que**
le composant électronique (40) est disposé entre le bourrage (22) sur tringle et la languette (50).

2. Le pneumatique (1) selon la revendication 1, dans lequel le composant électronique (40) est disposé entre un côté interne, dans le sens de la largeur du pneumatique, du bourrage (22) sur tringle et la languette (50).

3. Le pneumatique (1) selon la revendication 1, dans lequel le composant électronique (40) est disposé entre un côté externe, dans le sens de la largeur du pneumatique, du bourrage (22) sur tringle et la languette (50).

4. Le pneumatique (1) selon l'une quelconque des revendications 1 à 3, dans lequel le composant électronique (40) comporte au moins une partie disposée dans une position à 10 mm de l'extrémité extérieure, dans le sens radial du pneumatique, du bourrage (22) sur tringle vers un côté interne dans le sens radial du pneumatique.

5. Pneumatique (1) comprenant :
une paire de talons (11) comportant une tringle (21) de talon et un bourrage (22) sur tringle s'étendant vers un côté externe, dans le sens radial du pneumatique, de la tringle (21) de talon ;
une languette (50) entourant au moins une partie du talon (11) ;
un pli de carcasse (23) comportant un corps (24) de pli s'étendant d'un talon (11) à l'autre talon (11), et une partie (25) de pliage de pli, laquelle est repliée au niveau du talon (11), et entoure la languette (50) ; et
un composant électronique (40) incorporé à l'intérieur du pneumatique afin de se mettre en contact avec la languette (50),
**caractérisé en ce que**
la languette (50) comprend une partie latérale interne (51) recouvrant un côté interne, dans le sens de la largeur du pneumatique, de la tringle (21) de talon et du bourrage (22) sur tringle, et une partie latérale externe (53) recouvrant un côté externe, dans le sens de la largeur du pneumatique, de la tringle (21) de talon et du bourrage (22) sur tringle,
le composant électronique (40) étant disposé plus vers un côté externe, dans le sens radial du pneumatique, qu'une extrémité extérieure, dans le sens radial du pneumatique, du bourrage (22) sur tringle, entre la partie latérale interne (51) de la languette (50) et la partie latérale externe (53) de la languette (50).

6. Le pneumatique selon l'une quelconque des revendications 1 à 5, dans lequel la languette (50) contient une couche de cordons câblés de fibres organiques.
